Europäisches Patentamt

European Patent Office

Office européen des brevets

(11) Publication number: **0 168 863**
**B1**

## (12) EUROPEAN PATENT SPECIFICATION

(45) Date of publication of patent specification: **23.12.87**　　(51) Int. Cl.⁴: **B 01 D 46/02**

(21) Application number: **85200948.9**

(22) Date of filing: **15.06.85**

(54) **Method for removing particles, consisting of, or comprising bituminous material and/or other organic compounds, from waste gases.**

(30) Priority: **18.06.84 NL 8401919**

(43) Date of publication of application:
**22.01.86 Bulletin 86/04**

(45) Publication of the grant of the patent:
**23.12.87 Bulletin 87/52**

(84) Designated Contracting States:
**AT BE CH DE FR GB IT LI LU NL SE**

(56) References cited:
**FR-A-2 306 726**

**ERZMETALL, vol. 35, no. 10, 1982, pages 540-543, Verlag Chemie, Weinheim, DE; G. MENDEN: "Entstaubung von Trommel-, Herd- und Tiegelöfen für Zinkschrott"**

(73) Proprietor: **UZIMET B.V.**
**P.O. Box 19**
**NL-2600 AA Delft (NL)**

(72) Inventor: **Daae, Erik Ludvig**
**Van Alkemadelaan 1164**
**NL-2597 BL Den Haag (NL)**

(74) Representative: **Flamman, Han**
**LIOC Patents and Licensing P.O. Box 54**
**NL-3970 AB Driebergen (NL)**

Courier Press, Leamington Spa, England.

## Description

The invention relates to a method for removing particles, consisting of or comprising bituminous material and/or other organic compounds, from waste gases, by sucking or blowing the waste gases through filter bags which are cleaned, respectively are replaced periodically and which are precoated with dust-material.

The bituminous materials and other organic compounds—in general: pyrolyse products of oil, tar and/or bitumen—particularly occur in waste gases emanating from the processes of melting and refining of metalscrap, containing bituminous material and in waste gases emanating with burning of heavy oil, such as fuel oil or crude oil, where the temperature of the waste gases does not exceed about 800°C—the temperature at which these materials burn fully.

A method for removing the said particles from waste gases is described in FR—A—2306726 and FR—A—2347960. First the possibly present big-diameter more than about 50 μm—and glowing particles are removed from the waste gases by means of known methods. Further purification thereafter is realised by conducting the waste gases through a filter bag equipment. Such equipment mainly consists of a housing containing a number of oblong tube-shaped filter bags, each hung around a supporting frame and each at its open end connected with a ventilator for sucking off the waste gases. These filter bags consist of cloth, woven or non-woven, in particular a polyester needle-felt, which is oil-and water repellent. The waste gas is sucked through the walls of the filter bags.

The dust particles are filtered off from the waste gas at the side of a wall where the polluted waste gas is present. The purified gas leaves the housing via the open side of the filters. Cleaning of the filters is done pneumatically by means of an airstream—the 'beating' of the filters. It is done periodically and while the installation is in use, pressed air is blown into a set of filters via their open ends. During 'beating' the set of filters concerned is temporarily out of use.

A problem with purifying the waste gases in the described way is that after a short time the filters get saturated: the pressure gradient across the wall of a filter increases, dependent on for instance the dustload during the process and soon reaches a value where the filters have to be cleaned and when after some cleaning cycles no sufficient cleaning is achieved any more, the filters have to be replaced by fresh ones. Replacement of the filters has to take place within a few weeks. The resulting breaks in the process are disadvantageous.

In the mentioned publications it is proposed as a measure against clogging of the filters, to coat them beforehand with talc powder, clay powder or coal powder. This coating captures the dust particles before they reach the filtercloth. Thus the time, lapsing till the filters are clogged is prolonged. With dustloads of 100 mg/m³, cleaning of the filters is only necessary after a period of use of about 5 hours; as a consequence replacement of the filters is postponed as well. Although the time, lapsing between consecutive cleaning-operations of the filters is prolonged considerably, in industry the need is felt to prolong this period even further and accordingly to prolong the time lapsing between necessary replacements of the filters.

The method according to the invention meets this need and to that end is characterised in that the coating material is a lime mixture, consisting of mainly calcium hydroxide and calcium carbonate and having a specific surface of at least 10.000 cm²/g.

The use of lime powder in a process for purifying waste gases is described in "Erzmetall", 35 (1982) no. 10, page 540 and further. In the described process however, the aim is to free waste gases from anorganic Zn-compounds. To remove the said anorganic Zn-compounds from waste gases, using filter bag equipment, before the waste gases are conducted through the filters, lime powder is sucked through the filters, which results in providing the filters with a coating.

It is also known in processes for purifying waste gases which contain bituminous and other organic particles to continuously add lime powder to the waste gas stream, during the purification process. Thus a more or less continuous process for purification is possible, on the condition however that every one to five minutes the clogged filters—taken together in sets—are beaten. Final blockage of the filters occurs within a few weeks. As an example serves a waste gas purification installation which according to the last mentioned method worked during 16 hours per day continuously. The amount of lime powder needed was as high as about 1600 kg per day.

Apart from the disadvantage caused by the need to beat the bags more or less continuously, the disadvantage caused by the need to replace the bags after a few weeks and the disadvantage of the high quantity of lime—and the costs connected thereto—another disadvantage occurs: because of the huge quantity of lime, the material which is filtered off and which generally contains many valuable metals is consideraby less or not at all marketable any more.

It appears that, by applying the method according to the invention the quantity of lime powder, needed in the aforementioned installation for purifying waste gases during continuous periods of 16 hours per day, amounted to only about 5% of the quantity which has to be added to the waste gases if operated according to the described known method. This provides a considerable saving.

The thickness of the coating layer may be chosen such, that during a filter cycle of 16 hours—and longer—cleaning of the filters is not necessary.

It furthermore turned out, that the lifetime of the filters which in the case of operating the equipment according to the known method is set by the time at which the filters are finally blocked, now is prolonged till the mechanical life time of the filtercloth, i.e. several years. This also provides considerable savings.

As a further advantage of the precoating with lime powder may be mentioned that because of the fact that the polluting particles are captured before they reach the filters, the efficiency of the filters is improved and it is now possible to choose as filter 'cloth' also other materials than the conventional ones, such as for instance metal-wire.

The coating on the filtercloth may be effectuated in several ways. A preferred way according to the invention is to deposit the coating by, before the waste gases are conducted through the filter bags, conducting pulverised coating material in an airstream through the filter bags, until the coating thus applied to the filter bags shows the desired thickness. 'Desired thickness' here means: a thickness such, that during the envisaged cycles no cleaning-in-between is necessary.

It appeared, that in case the pressure gradient across filters and coating has risen too much, for instance because the dustload was higher than expected or because the coating layer was too thin, it is easily possible to remedy that by as yet increasing the thickness of the coating layer, while the equipment remains in operation. According to a further prefrred example of the method according to the invention in that case during some time pulverised coating material is added to the waste gases until the pressure gradient is reduced to a desired value.

The method according to the invention is used particularly in the process of purifying waste gases emanating from the melting and refining of lead. The temperatures at which these processes take place are about 400°C. At those temperatures most of the bituminous material and many organic compounds are not burned, so that they occur in the waste gases from which they have to be removed before they stream out in the open air. They occur in the waste gases in the form of dust, droplets or aerosols.

The method according to the invention is further explained at the hand of an example. The results are compared with those, obtained when applying the conventional method.

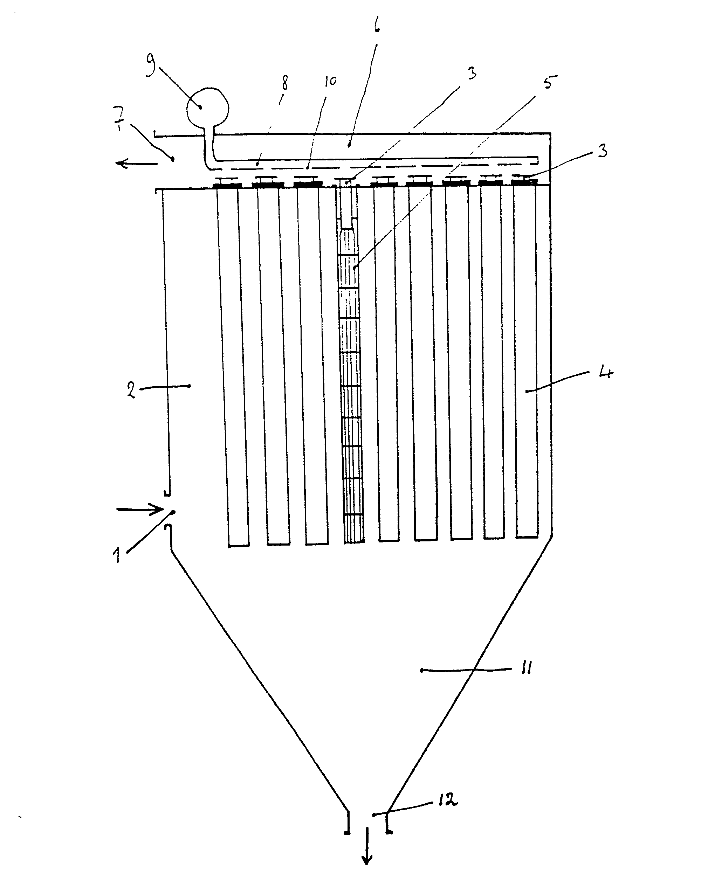

Waste gases, sucked off from a bath of molten leadscrap, after having been freed from heavy and glowing particles, are conducted through a filter bag installation as indicated schematically in the drawing.

The installation comprises 252 filter bags, with a total filter surface of about 460 m². To a maximum of 20.000 m³ waste gas per hour is sucked off. The dust contents amounts to an average of about 500 mg/m³. The temperature of the waste gas stream in the installation is about 70°C. For process-technical reasons the pressure gradient across a filter may amount to a maximum of about 1.500 Pa. Before the waste gases are conducted through the installation the filters are precoated with lime powder with the following composition:

| Calcium hydroxide: | 70% minimum |
| Calcium carbonate: | 25% maximum |
| Calcium phosphate: | 0,1% maximum |
| Magnesiumoxide: | 1,5% maximum |
| Siliciumdioxide: | 1,5% maximum |
| Sesquioxide: | 1,0% maximum |
| Moisture: | 2,0% maximum |

99% of the lime powder consists of particles with a diameter of less than 0.21 mm. The specific surface is about 15.000 cm³/gram.

In order to be able to operate the installation for 16 hours continuously—i.e. without cleaning the filters in between—a quantity of 75 kg lime powder had to be sucked in in order to form a coating of sufficient thickness.

The efficiency of the filter with the existing offer of dust during the whole operating cycle appeared to be at least 99,9%. After operating the installation during 16 hours the filters were cleaned pneumatically and were prepared for a next cycle. Such a work-cycle may be repeated for several years with the same filters without loss of efficiency.

The same installation, used for purifying the same waste gases in the same quantities, without precoating the filter bags but while adding continuously lime powder of the same composition as in the afore described case to the waste gases, lead to the following results: in order to be able to operate the installation during 16 hours continuously, while pneumatically cleaning the bags about every 5 minutes—the pressure gradient across the filters after 5 minutes increased till about 1.000 Pa—a quantity of about 1600 kg lime powder had to be added.

As compared with the installation, operated with filters, precoated with lime powder, the capacity for treating waste gas was about 15% lower. The filtering efficiency on the average is 99,2%.

By way of example a filter bag installation used for operating the method according to the invention is shown in the drawing schematically. The waste gases stream via the inlet opening 1 into the housing 2. They are sucked out of the housing 2 along and through the mouthpieces 3, which are situated in the open ends of the tube shaped filters 4. These filters are each supported by a frame 5, to which also the mouthpieces 3 are mounted. The particles to be removed from the waste gases stay behind at the outer surface of the filters; the purified waste gas leaves the housing 2 via the internal of the filters 4, is collected in the room 6 and is carried off from there via the exit opening 7. Over the mouthpieces 3 there is situated a conduit-pipe 8, into which may be sent pressed air, via the vessel 9. The conduit-pipe 8 is provided with openings 10 which correspond with the mouthpieces 3, such that in case air streams into the conduit-pipe, this air streams via the opening 10 and the mouthpieces 3 into the filters with heavy force. The expansion of this pressed air from about 8 atm. to 1 atm. within the filters 4 causes the gusts of air, causing the captured dust particles to loosen from the outside of the filterwall: the 'beating' of the filter. The particles which come free from the filter bags 4 by the 'beating' are collected in the room 11 and are carried off from there via the exit opening 12.

## Claims

1. Method for removing particles, consisting of or comprising bituminous material and/or other organic compounds, from waste gases, by sucking or blowing the waste gases through filter bags (4), which are cleaned, respectively are replaced periodically and which are precoated with dust-material, characterised in that the coating material is a lime-mixture consisting of mainly calcium hydroxide and calcium carbonate and having a specific surface of at least 10.000 cm$^2$/g

2. Method according to claim 1 characterised in that the coating is applied by, before the waste gases are conducted through the filter bags (4), conducting pulverised coating material in an airstream through the filter bags (4), until the coating, thus applied to the filter bags (4) shows the desired thickness.

3. Method according to claim 1 or 2, characterised in that if during the conducting of waste gases through the filter bags (4) the pressure gradient across the filters (4) reaches a predetermined high value, pulverised coating material is added to the waste gas stream, until the pressure gradient had come down to a desired value.

4. Method according to one or more of the preceding claims applied for the purification of waste gases emanating from the process of melting and refining leadscrap.

## Patentansprüche

1. Verfahren zum Entfernen von Teilchen, die aus bituminösen Stoffen und/oder organischen Verbindungen bestehen oder sie enthalten, aus Abgasen mit Hilfe von Durchsaugen oder Durchblasen der Abgase durch Filtersäcke, die mit einem pulverförmigen Material vorbeschichtet sind und periodisch gereinigt, beziehungsweise ersetzt werden,

dadurch gekennzeichnet, dass das Beschichtungsmaterial eine Kalkmischung ist, die hauptsächlich aus Kalziumhydroxid und Kalziumkarbonat besteht und eine spezifische Oberfläche von mindestens 10.000 cm$^2$/g aufweist.

2. Verfahren entsprechend Anspruch 1, dadurch gekennzeichnet, dass für das Anbringen der Beschichtung vor dem Durchströmen der Abgase pulverisiertes Beschichtungsmaterial in einen Luftstrom gegeben und durch die Filtersäcke geleitet wird, bis die auf diese Weise auf die Filtersäcke aufgebrachte Beschichtung die erforderliche Dick erreicht hat.

3. Verfahren entsprechend Ansprüche 1 und 2, dadurch gekennzeichnet, dass, wenn beim Durchführen der Abgase durch die Filtersäcke 4, der Druckgradient über die Filter einen hohen, vorgegebenen Wert erreicht, pulverisiertes Beschichtungsmaterial zum Abgasstrom hinzu gegeben wird, solange, bis der Druckgradient wieder auf den gewünschten Wert zurückgebracht ist.

4. Verfahren entsprechend einem oder mehreren der vorangegangenen Ansprüche angewandt für die Reinigung von Abfallgasen, wie sie bei den Schmelz-, und Raffinationsprozessen von Abfallblei auftreten.

## Revendications

1. Procédé de séparation de particules, se composant de ou comprenant de la matière bitumineuse et/ou d'autres composés organiques, de gaz brûlés, par aspiration ou soufflage des gaz brûlés à travers des sacs filtrants (4), qui sont nettoyés, sont remplacés respectivement périodiquement et qui sont préalablement enduits d'une matière sous forme de poussière, caractérisé en ce que la matière d'enduction est un mélange de chaux formé principalement d'hydroxyde de calcium et de carbonate de calcium et ayant une surface spécifique d'au moins 10.000 cm$^2$/g.

2. Procédé suivant la revendication 1, caractérisé en ce que l'enduit est appliqué, avant que les gaz brûlés ne soient amenés à traverser les sacs filtrants (4), en amenant de la matière d'enduction pulvérisée dans un courant d'air à travers les sacs filtrants (4), jusqu'à ce que l'enduit, ainsi appliqué aux sacs filtrants (4) ait l'épaisseur désirée.

3. Procédé suivant l'une ou l'autre des revendications 1 et 2, caractérisé en ce que si au cours de l'acheminement de gaz brûlés à travers les sacs filtrants (4), le gradient de pression à travers les filtres (4) atteint une valeur élevée prédéterminée, on ajoute de la matière d'enduction pulvérisée au courant de gaz brûles, jusqu'à ce que le gradient de pression descende à une valeur désirée.

4. Procédé suivant l'une quelconque des revendications précédentes, applique pour la purification de gaz brûlés provenant du procédé de fusion et de raffinage de mitraille de plomb.